# EUROPÄISCHE PATENTSCHRIFT

(11) **EP 0 987 202 B1**
(45) Veröffentlichungstag und Bekanntmachung des Hinweises auf die Patenterteilung: **26.03.2003**
(21) Anmeldenummer: 99115318.0
(22) Anmeldetag: 03.08.1999
(51) Int. Cl.: B65G 53/16, B65G 53/66

(54) **Pneumatische Fördervorrichtung mit gleichmässiger Lüfteinblasung von Bypass-Luft**
Pneumatic conveyor with uniform supply of by-pass air
Convoyeur pneumatique avec alimentation uniforme en air by-pass

(30) Priorität: 18.09.1998 DE 19842773
(43) Veröffentlichungstag der Anmeldung: 22.03.2000
(73) Patentinhaber: MOTAN Materials Handling GmbH, 88250 Weingarten (DE)
(72) Erfinder: Heep, Dieter, 88368 Bergatreute (DE)
(74) Vertreter: Riebling, Peter, Dr.-Ing.

(56) Entgegenhaltungen:
- EP-A- 0 603 601
- DE-B- 1 150 320
- US-A- 4 615 648

## Beschreibung

Die Erfindung betrifft eine Vorrichtung zum geregelten Fördern von empfindlichen, fluidisierbaren Schüttgütern mit herabgesetzter Geschwindigkeit.

In der Vergangenheit wurden Schüttgüter mit hoher Bandbreite von Partikelgrössen hauptsächlich mit Hilfe von Bypass-Förderleitungen transportiert, die eine Herabsetzung der Fördergasgeschwindigkeit unter 10 m/s ermöglichten.

Kriterium zum ungestörten Betreiben war der Ventilabstand, der, je nach zu erwartendem Pfropfenverschiebedruck, bezogen auf das jeweilige Schüttgut festgelegt werden musste.

Damit wurde der Betrieb der Rohrleitung mit den gleichen Schüttgütern, aber unterschiedlicher Komfraktion, erheblich eingeschränkt.

Bei manchen Anlagen wurden Ventile zur Halbierung der Abstände nachgerüstet, bei anderen Anlagen wurden aus Vorsicht zu viele Ventile investiert.

Die selbstverständlichen Bedingungen, kein Produktaustritt zur Atmosphäre, kein Produkteintritt auf die Reinluftseite der Ventile und ihrer Versorgungsleitung machte die Angelegenheit risikoreich und teuer.

In der deutschen Patentschrift DE 1135366 erfolgt die Luftzufuhr über die ganze Länge der Rohrleitung über eine poröse Einlage, in der EP 0 452 378 B1 wird eine ähnliche Lösung in einem flexiblen Schlauch installiert. Das sind relativ kostenaufwendige Lösungen wegen der hohen Herstellungskosten für die Förderleitung.

Dazwischen liegen eine ganze Reihe ähnlicher Lösungen, z.B. DE 2150403 A1, DE 1750541 C1 oder die DE 2 209 674 C1, wo über die Zuführung von Bypass-Luft Einfluss auf die pneumatische Dichtstromförderung genommen wird.

Einerseits erwartet man über die ganze Rohrleitungslänge den Aufbau eines Fliessbettes, andererseits wird durch die zusätzliche Fliessbettluft die Fördergeschwindigkeit unzulässig erhöht.

Die gewählten Fluidisierstoffe, wie Sinter-Kunststoffe, Textilgewebe oder Drahtlaminat sind in Strömungsrichtung an der schüttgut-berührten Oberfläche möglichst schüttgut-frei zu halten, wirken aber von der Reinluftseite als Tiefenfilter, was bei Staubbelastung zur Erhöhung der Druckdifferenz und letzlich zum Bruch der Belüftungsfläche führen kann.

In der Praxis befriedigte keine Lösung oder war in der Herstellung so kostenintensiv, dass in nur wenigen Ausnahmen Pilotanlagen gebaut wurden.

Aus der US 4,615,648 geht ein Fördersystem für Pulver oder Granulat hervor, welches mittels Druckluftzufuhr in eine Rohrleitung Pulver oder Granulat befördert bzw. die Leitung vor dem Verstopfen bewahren soll. Die Anordnung ist dabei so ausgestaltet, daß parallel zu der Rohrleitung für das Granulat oder das Pulver eine weitere rohrförmige Leitung vorhanden ist, die direkt auf der ersten Rohrleitung als U-Profil aufgesetzt und verschweißt ist, und somit einen Kanal ausbildet der nur durch die Aussenwandung des ersten Rohres von dessen Innenraum getrennt ist. An bestimmten Stellen entlang des ersten Rohres ist nun jeweils eine Durchgangsöffnung zum zweiten, parallelen Rohrraum angeordnet, die eine Verbindung zwischen den beiden Rohrräumen herstellen. Diese Durchgangsöffnungen sind mit gesinterten Materialien ausgelegt, so daß sie luftdurchlässig sind. An der Aussenwandung des zweiten Rohres sind in axialer Anordnung zu den Durchgängen Schrauben angeordnet, die eine Querschnittsverengung im zweiten Roh bewirken, und dadurch eine Erhöhung der Luftströmung und damit des Luftdruckes in diesem Bereich bewirken. Dadurch wird die zugeführte Druckluft teilweise in den Raum des ersten Rohres gepresst. Es handelt sich also um eine kontinuierliche Luftzufuhr in die erste Rohrleitung, also die Förderleitung für Granulat bzw. Pulver.

Die DE 11 50 320 B zeigt eine pneumatische Förderrinne für staubförmige und feinkörnige Güter. Es handelt sich dabei um eine Rohrförderanlage mit einer daran angeordneten, bypaßähnlichen Rohrführung die in etwa parallel zum Förderrohr angeordnet ist, und im Anfangsbereich des Förderrohres an dessen Oberseite angeflanscht ist, so daß ein Grundluftstrom im Anfangsbereich des Förderrohres durch Zuführung von Druckluft an entsprechenden Einlaßstellen erzeugt werden kann. Eine weitere Druckluftzufuhr erfolgt entlang der Unterseite des Förderrohres durch Zufuhr mittels einer weiteren Rohrleitung und zwischen dieser und der Förderrohrleitung angeordneten Ventilen mit in Förderrichtung immer geringeren Luftdurchlaß, so daß im Anfangsbereich des Förderrohres der stärkste Luftzusatz erfolgt, und sich dieser bis zum Ende hin immer mehr verringert. Hier ist ein enormer Zusatzaufwand durch die Anbringung der bypaßähnlichen Leitung erforderlich, durch die die Anzahl der Rohre auf drei steigt. Des weiteren ist es notwendig jdese einzelne Ventil für die Luftzufuhr zur Schüttgutförderung extra zu dimensionieren, so daß eine jeweils geringere Luftzufuhr im Verlauf stromabwärts der Förderleitung gewährleistet ist.

Die EP 0 603 601 A2 zeigt eine Vorrichtung zum pneumatischen Fördern von Schüttgut mit einer Förderleitung und einer parallel dazu verlaufenden Begleitleitung, die beide an die selbe Druckluftquelle angeschlossen sind, so daß in beiden Leitungen eingangs der selbe Luftdruck herrscht. Von der Begleitleitung gehen Zweigleitungen ab, die in federbelasteten Überströmventilen münden, die an vorgegebenen Stellen längs der Förderleitung vorgesehen sind. Bilden sich in der Förderleitung verstopfungen des Fördergutes, so öffnen die Überströmventile und blasen dadurch die Förderleitung frei.

Wesentlich ist dabei, daß die Schließkraft des jeweiligen Überströmventiles so eingestellt ist, daß die Federkraft wtwa die Druckdifferenz zwischen Förderdruck am Anfang der Förderleitung bzw. statischem Druck in der Begleileitung und dem Druck in der Förderleitung am Ort des betreffenden Überströmventiles entspricht, wenn der in der Förderleitung eingebrachte Massenstrom ungestört am jeweiligen Überströmventil vorbeifließt.

In dem eigenen Europa-Patent EP 0 603 601 B1 wird ein Verfahren beschrieben, in dem beabstandete, federbetätigte Überströmventile angeordnet sind.

Die einwandfreie Funktion dieses Verfahrens hängt von der Wahl der Ventilbeabstandung ab, welche wiederum durch die Schüttguteigenschaften vorgegeben werden.

Werden verschiedene Schüttgüter transportiert, muss die Anlage auf den geringsten, notwendigen Ventilabstand ausgelegt werden, da sonst eine Verstopfung zwischen zwei Ventilen erfolgen kann.

Bei diesem Stand der Technik wird als nachteilig empfunden, dass die Überström-Ventile praktisch lediglich punktförmig die Luft in das Förderrohr einblasen, wodurch eben der Nachteil besteht, dass zwischen den einzelnen Einblasstrecken die Gefahr besteht, dass sich Pfropfen bilden.

Die Erfindung liegt deshalb ausgehend von der EP 603 601 B1 die Aufgabe zugrunde, eine Vorrichtung der eingangs genannten Art so weiterzubilden, dass eine gesteuerte Luftzufuhr in den Bereichen der drohenden Verstopfung (d.h. also zwischen den Überström-Ventilen) eingespeist wird. Zur Lösung der gestellten Aufgabe ist die Erfindung durch die technische Lehre des Anspruches 1 gekennzeichnet.

Wesentliches Merkmal der Erfindung ist, dass erfindungsgemäss das an sich bekannte Überströmventil nun nicht mehr punktförmig in die Förderleitung einbläst, sondern in Form eines sich in axialer Richtung der Föderleitung erstreckenden Luftschleiers, der deshalb das Fördergut über die gesamte Länge in diesem Bereich erfasst und fluidisiert.

Mit der gegebenen technischen Lehre ergibt sich der wesentliche Vorteil, dass eben auf eine punktförmige Einblasung der Bypass-Luft verzichtet wird, und dass diese Bypass-Luft nun über eine sehr grosse Länge der Förderleitung verteilt eingeblasen wird, so dass auf jeden Fall die Pfropfenbildung im Bereich zwischen den Überströmventilen nach dem Stand der Technik vermieden wird.

Kennzeichnend für die Erfindung ist die Beibehaltung der Vorteile der in der EP 601 603 B1 beschriebenen Merkmale von definiert voreingestellten Bypassventilen (deren Einblascharakteristik der Fördercharakteristik der Förderleitung angepasst ist, so dass an den "Gefahrstellen" Pfropfen vermieden werden) mit einer - im Rahmen der Erfindung vorgeschlagenen - vergleichmäßigten Lufteinblasung und Verteilung dieser Einblasluft - nun nicht mehr punktförmig - sondern in Form einer in axialer Richtung der Förderleitung sich erstreckenden Luftschleiers. Auf diese Weise können an allen Stellen der Förderleitung axiale Luftschleier am Fördergut erzeugt werden, welches dieses fluidisiert, fließfähig hält und fördert.

Hieraus ergibt sich der Vorteil, dass bei Beibehaltung eines Ventilabstandes von Überströmventilen im Abstand von etwa 0,3 bis 1,5 m in einem Rohrsegment von etwa 6 m Normlänge keine feststehenden Pfropfen mehr feststellbar sind, weil eben die Lufteinblasung der Überströmventile in die Wandung der Förderleitung im wesentlichen jede Stelle der Förderleitung erreicht.

Hierbei wird der nach dem Stand der Technik punktförmig ausgebildete Ventilauslass jetzt langloch-förmig ausgebildet, wobei die längere Seiten der Langlochform dem gewählten Ventilabstand entsprechen und die kürzeren Stirnseiten sich auf den Längsseiten (z.B. der Oberseite oder der Unterseite) des eigentlichen Förderrohres in etwa berühren oder einen kurzen gegenseitigen Abstand zueinander bilden..

Die eigentliche Luftzuführung in dem Luftverteilkanal in Richtung auf die Durchbrechungen in der Wand des Förderrohres (also in radialer Richtung) kann hierbei in verschiedenster Weise ausgebildet sein. Es kann z.B. als Übergangsmaterial zwischen dem Luftverteilkanal und der Durchbrechung in der Wandung des Förderrohres ein Textilmaterial verwendet werden. Ebenso kann das Förderrohr ansich aus Sintermaterial mindestens in einem Bereich ausgebildet werden, auf den luftschlüssig der besagte Luftverteilkanal aufgesetzt wird. Der Luftverteilkanal ist wiederum luftschlüssig mit der Auströmbohrung des Bypassventils nach der EP 0603 601 B1 verbunden. Die in dem Luftverteilkanal geführte Luft wird dann lediglich in diesem Bereich durch die Sinterbohrungen dieses Sintermetalls in das Förderrohr eindringen und das dort befindliche Fördermaterial fluidisieren.

Ebenso ist es in einer weiteren Ausgestaltung vorgesehen, dass die Wandung zwischen dem Luftverteilerkanal und dem Förderrohr durch einzelne Bohrungen durchbrochen ist und dass in diesen Bohrungen zugeordnete Rückschlagventile eingesetzt sind, um einen Übertritt des geförderten Materials in die Luftleitung zu vermeiden.

Um der Praxis gerecht zu werden und um die Langloch-förmigen Ventilauslässe auf der Aussenseite des eigentlichen Schüttgut-Transportrohres abzudichten, ist eine entsprechende Abdichttechnik anzuwenden.

Mit Hilfe eines Schutzrohres wird das eigentliche Förderrohr mit einer über eine oder mehrere Luftkammer an der ganzen Länge anliegenden Bypassluftzuführungsmöglichkeit zu Aussenwelt abgedichtet, wobei die durch Luftkammer und Förderrohr gebildeten Hohlkammern im Schutzrohr durch Kunststoff-Schaum oder Harz bzw. eine härtende Masse ausgefüllt wurden und so eine Abdichtung untereinander gewährleistet wird.

Dies hat den Vorteil, dass die verschiedensten Förderrohrmaterialien bezogen auf das zu transportierende Schüttgut mit den unterschiedlichsten dem Bedarf angepassten Schutzrohrmaterialien kombiniert werden können und dass immer sichergestellt ist, dass kein Schüttgut über die Verbindungsstellen in Reinluftzuführung gelangen kann und das System unwirksam werden lässt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schematisiert die Anordnung einer Förderleitung mit Überström-Ventilen
- Figur 2:: Eine vergrösserte Darstellung eines einzigen Überströmventils mit Anbau an der Förderleitung nach der Erfindung
- Figur 3:: Ein Schnitt durch eine Ausführungsform ähnlich wie Figur 2 mit weiteren Einzelheiten.

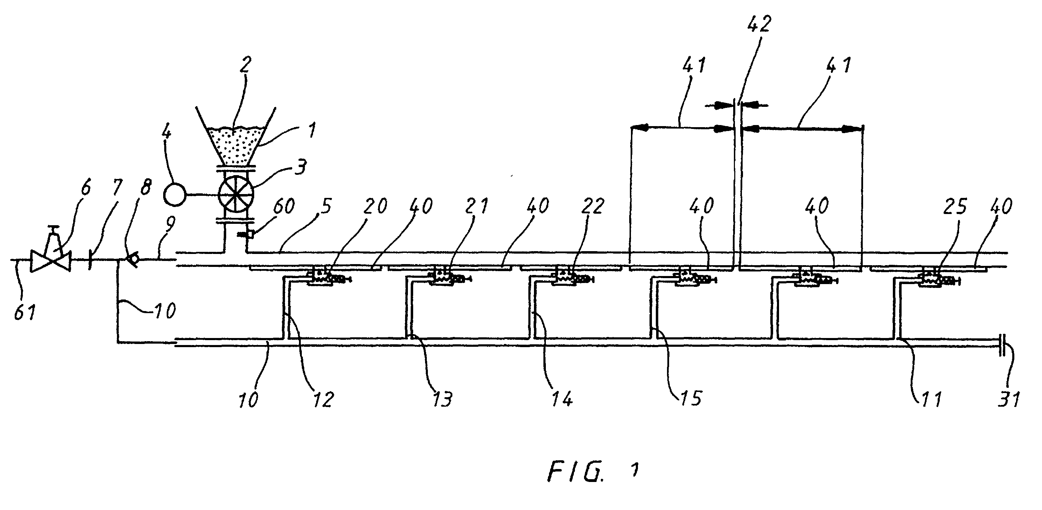

Zur Funktion der in Figur 1 dargestellten Förderleitung und der zugeordneten Bypassventile wird auf die eigene EP 603 601 B1 verwiesen. Die gesamte Offenbarung dieses Patentes soll von der Offenbarung der vorliegenden Erfindung umfasst sein, soweit es auf die Erläuterung des Erfindungsgedankens ankommt.

In Figur 1 ist allgemein gezeigt, dass das Schüttgut 2 von einem Aufgabetrichter 1 aus über eine Zellenradschleuse 3 in einer Förderleitung 5 gefördert wird. Im regelmässigen Abständen sind an dieser Förderleitung Überström-Ventile 20-25 angeordnet, welche in der in der EP 603 601 B1 beschriebenen Weise arbeiten.

Um nun zu vermeiden, dass eine punktförmige Einblasung der jeweiligen Überströmventile 20-25 in die Förderleitung 5 erfolgt, wird die vorliegende Erfindung verwendet.

Es ist gemäss Figur 1 vorgesehen, dass jedes Überströmventil 20-25 nicht direkt in die Förderleitung 5 einbläst, sondern in einen Luftverteilkanal 40, der seinerseites luftschlüssig die Wandung der Förderleitung 5 über eine grössere axiale Länge durchbricht, so dass über diesen gesamten, nun geschaffenen axialen Luftraum 50 die Luft aus den Überström-Ventilen 20-25 in die Förderleitung 5 eingeblasen wird.

Damit wird zuverlässig eine Pfropfenbildung im Zwischenraum zwischen einzelnen Lufteinblasstellen eintlang der Förderleitung 5 vermieden, weil die Luftverteilkanäle 40 in axialer Richtung so angeordnet sind, dass sie sich entweder möglichst berühren oder einen kurzen axialen Abstand voneinander einnehmen. Die Länge 41 des jeweiligen Luftverteilkanals 40 ist also möglichst gross gewählt, während der Abstand 42 der Luftverteilkanäle 40 relativ klein ist. Er kann im Bereich von 0 cm bis 30 cm liegen.

Bei einem grösseren Abstand der jeweiligen Stirnwände 51, 51a der jeweiligen Luftverteilkanäle 40 besteht dann wiederum die Gefahr, dass sich Pfropfen in diesen nicht luft-versorgten Bereichen bilden.

In einer ersten bevorzugten Ausführungsform sind die Luftverteilkanäle 40 fluchtend hintereinanderliegend an der Förderleitung 5 angeordnet, wobei eine Durchbrechung in der Förderleitung in diesem Bereich vorhanden ist. Über die Art der Durchbrechung wurde bereits schon im allgemeinen Teil der Beschreibung gesagt, dass es sich um ein Textilmaterial, ein Netzmaterial, ein Sintermaterial oder um einzelne Bohrungen handelt, die ggf. noch mit Rückschlagventilen bestückt sein können. Neben der axial hintereinander fluchtend anliegenden Anordnung der Luftverteilkanäle 40 ist es in einer anderen Ausgestaltung vorgesehen, dass die Luftverteilkanäle 40 nicht axial fluchtend hintereinander angeordnet sind, sondern am Umfang verteilt an der Förderleitung ansetzen und sich mit ihren Stirnflächen 51, 51a sogar überlappen können, um vollkommen durchgehende, luftversorgte Bereiche bezüglich des Luftraumes 50 zu schaffen.

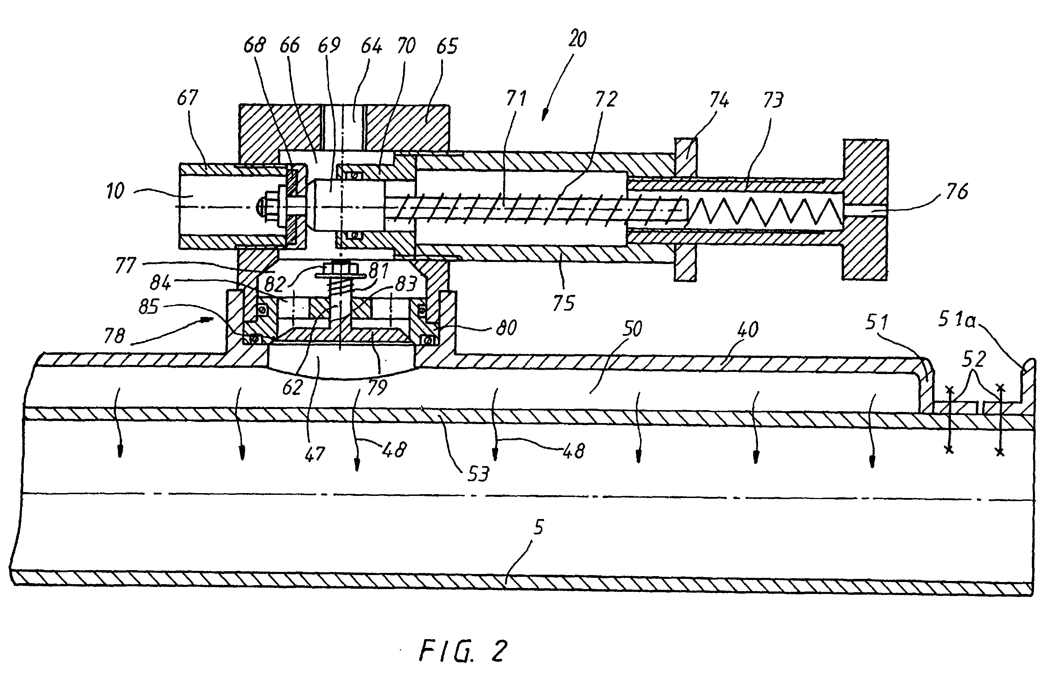

Aus Figur 2 gehen weitere Einzelheiten der Erfindung hervor.

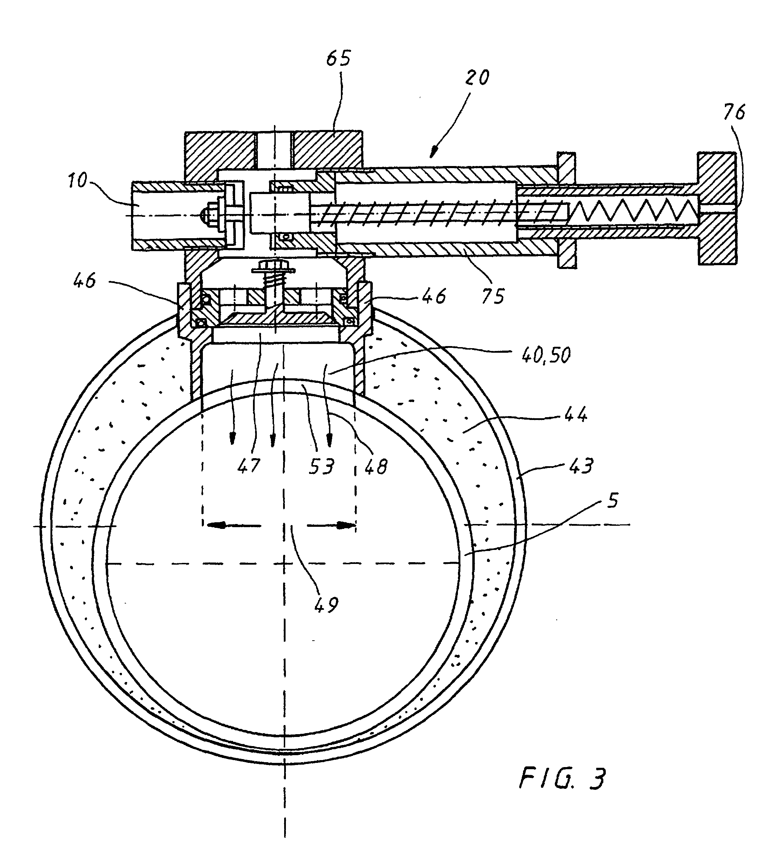

Es ist erkennbar, dass das Überström-Ventil 20 nun mit seiner Ausströmöffnung 47 luftschlüssig mit einem Luftverteilkanal 40 verbunden ist, dessen Seitenwände 46 (vergleiche Figur 3) vollkommen dicht sind und abdichtend auf dem Aussenumfang der Förderleitung 5 aufsitzen. Es können hierbei noch verschiedene Abdichtmassnahmen verwendet werden, wie z.B. Dichtungsleisten, flexible Dichtungen und dgl. mehr.

Ebenso sind die jeweiligen Stirnwände 51 des Luftverteilkanals 40 vollkommen luftdicht und sitzen ebenfalls luftdicht auf dem zugeordneten Aussenumfang der Förderleitung 5 auf.

Soweit der Luftverteilkanal 40 die Förderleitung 5 überdeckt, ist in diesem Bereich eine luftschlüssige Durchbrechung der Wandung der Förderleitung 5 vorgesehen. Im gezeigten Ausführungsbeispiel nach Figur 2 und 3 ist diese Durchbrechung als in Längsrichtung verlaufender Schlitz 53 ausgebildet, der etwa der lichten Weite des Luftverteilkanals 40 entspricht.

Selbstverständlich können auch mehrere Schlitze in axialer oder in radialer Richtung hintereinanderliegend und nebeneinanderliegend angeordnet werden.

Statt des Schlitzes 53 können auch einzelne, verteilte Bohrungen angeordnet werden, wie z.B. Lochbleche, Netze, Sinterwandungen oder dgl mehr, um einen Übertritt des geförderten Materials von der Förderleitung in den Luftverteilkanal 40 zu vermeiden.

Das Überströmventil 20 besteht aus einem Ventilgehäuse 65, welches eine obere Bohrung 64 zum Einschrauben eines Manometers aufweist.
Es ist eine erste Kammer 66 in dem Ventilgehäuse 65 eingearbeitet, in welche ein Anschlußstutzen 67 mündet, welcher an die Begleitleitung 10 angeschlossen ist.
An der Mündung des Stutzens 67 ist eine Ventilscheibe 68 federbelastet angedrückt, die mit einem Ventilstößel 69 verbunden ist. Der Ventilstößel 69 ist abgedichtet in einer Lagerbüchse 70 geführt und wird federbelastet unter der Kraft einer Feder 72 an die Öffnung im Stutzen 67 gepreßt.
Die Feder 72 umgreift hierbei einen Ventilschaft 71, der mit dem Ventilstößel 69 verbunden ist. Die Feder 72 stützt sich hierbei mit ihrem äußeren Ende an der Innenseite einer Einstellhülse 73 ab, die mit einer Kontermutter 74 fixiert werden kann.
Durch Ein- oder Ausschrauben der Einstellhülse 73 kann somit die Federkraft der Feder 72 stufenlos verändert werden.
Der Ventilschaft 71 erstreckt sich im übrigen durch ein Rohr 75, welches Teil des Gehäuses 65 ist und welches in eine entsprechende Gewindebohrung eingeschraubt ist. An der Rückseite der Einstellhülse 73 ist eine Entlüftungsbohrung 76 angeordnet.
Im Ventilgehäuse 65 ist eine weitere Kammer 77 angeordnet, in welcher ein Kegelventil 78 angeordnet ist. Dieses Kegelventil 78 besteht aus einem Ventilkegel 79, der in Schließrichtung vom Druck in dem Luftverteilkanal 40 und damit durch den Druck in der Förderleitung 5 beaufschlagt wird und hierbei einen Ventilsitz 85 mit einer gehäusefesten Ventilplatte 80 bildet. Diese Ventilplatte 80 weist eine Scheibe auf, in welcher Bohrungen 84 eingearbeitet sind. Durch eine Bohrung 83 in dieser Scheibe greift der Ventilstößel 82 des Ventilkegels 79 hindurch und ist an seinem Ende mit einer Mutter 82 verbunden. Im Zwischenraum zwischen der Mutter 82 und der Ventilplatte 80 ist eine Feder 81 angeordnet. Auf diese Weise wird der Ventilkegel 79 federbelastet durch die Feder 81 in Schließstellung an seinem Ventilsitz 85 gehalten.
Das Überströmventil 20 befindet sich im Gleichgewicht. wenn die in Öffnungsrichtung wirkende Kraft auf die Ventilscheibe 68 sich im Gleichgewicht befindet mit der Summe der Kräfte, die bestehend aus der Federkraft der Feder 72, die in Schließstellung auf die Ventilplatte 68 wirkt, zuzüglich der Kraft auf eine Ringfläche auf den Ventilstößel 69, welche entsteht durch den statischen Druck in der Kammer 66. Dieser Druck entsteht durch die Schließstellung des Ventilkegels 79 unter der Kraft der Feder 81 in der Kammer 77. Diese Schließstellung hängt wiederum von dem Druck in der Förderleitung 5 ab.
Zur weiteren Erläuterung wird ausgeführt, dass der statische Druck in der Kammer 66 dadurch entsteht, dass der Druck in der Förderleitung 5 zunächst den Ventilkegel 79 schließt. Über einen sich beginnenden Druckausgleich füllt somit die Begleitleitung 10 über den Stutzen 67 bei sich öffnender Ventilscheibe 68 die Kammer 66 auf, bis sich das Ventil im Gleichgewicht befindet und die Feder 72 das Ventil wieder in Schließstellung bringt. Dies ist die Ausgangslage des Überströmventils 20. Es öffnet sich demzufolge dann, wenn der Druck in der Förderleitung 5 abfällt, und zwar unterhalb des Druckes, den die Feder 81 in Schließrichtung auf den Ventilkegel 79 ausübt.

Die einzelnen Federn 81 der hintereinanderfolgend an der Förderleitung 5 angeordneten Überströmventile 20-25 sind nun so einzustellen, dass über die Länge der Förderleitung vom Förderbeginn bis zum Förderende Federdrücke mit stufenweise ansteigender Federkraft gewählt werden. Der Federdruck wird also stufenweise pro Überströmventil mit stufenweise ansteigender Federkraft gewählt, das nächst dem Aufgabetrichter 2 liegende Überströmventil 20 hat also die geringste, eingestellte Federkraft, während das nächst dem Förderende liegende Überströmventil 25 eine relativ höhere Federkraft aufweist. Jedes Überströmventil 20-25 ist bezüglich eines idealisierten Druckverlaufs (linear abfallende Gerade vom Förderbeginn zum Förderende) längs der Förderleitung so eingestellt, dass es sich gerade im Übergangsbereich zwischen dem Öffnungsbereich und dem Schließzustand befindet. Jedes Überströmventil befindet sich damit im Gleichgewichtszustand und jede Tendenz zur Druckerniedrigung in der Förderleitung aufgrund eines sich bildenden Pfropfens beaufschlagt das an dieser Stelle befindliche Überströmventil, welches damit öffnet und Luft von der Reinluftleitung in die Förderleitung einbläst und damit das Fördergut fluidisiert und den sich gerade im Ansatz bildenden Pfropfen zerstreut.

Von besonderem Vorteil ist, dass sozusagen die "Fühlerfläche" (= Luftraum 50) zur Erfassung von Druckänderungen in der Förderleitung des jeweiligen Überströmventils nun flächenmäßig groß und langgestreckt in die Förderleitung hineinreicht und damit alle Druckänderungen über diesen gesamten Bereich (Luftraum 50) erfasst. Damit ist die Reaktion des jeweiligen Überströmventils feinfühliger als vergleichsweise ein punktförmiges Hineinragen, wie aus der EP 0603601 B1 bekannt.

Die Figur 3 zeigt als mögliche Ausführungsform, dass das Schutzrohr (43) mit einem Dichtmaterial 44 ausgekleidet ist. Das Dichtmaterial 44 ist z.B. ein Polyurethanschaum, ein flüssiges Dichtungsmittel oder eine Stopfung aus Mineralwolle oder dgl. mehr.

Wichtig ist nur, dass das Dichtmaterial 44 die Position des Schutzrohr 43 und des Luftverteilkanal 40 zu der Förderleitung 5 gewährleistet.

Die aus der Ausströmöffnung 47 des Überströmventil 20 gelangende Luft strömt in Pfeilrichtung 48 nun durch diese luftschlüssigen Öffnungen, welche die Wandung der Förderleitung 5 im Bereich des Luftverteilkanals 40 durchbrechen und strömt somit in den Innenraum der Förderleitung ein, um das dort geforderte Material zu fluidisieren und zu fördern, wobei zuverlässig Pfropfen vermieden werden.

In den Figuren 2 und 3 ist zwar dargestellt, dass die jeweiligen Überström-Ventile auf der Oberseite der Förderleitung liegen und die Luft von oben her einblasen. Dies ist jedoch nicht lösungsnotwendig; die Überström-Ventile können auch unten, oben oder seitlich angeordnet werden und die Luftverteilkanäle können ebenfalls unten, oben oder seitlich angeordnet werden. Die Breite des Luftverteilkanals 40 nach Figur 3 in Bezug zum Durchmesser der Förderleitung 5 hängt ab vom Durchmesser des gewählten Schutzrohres 43 und wird allein aus ökonomischen Gründen gewählt. Es kann deshalb vorgesehen werden, dass die Breite des Luftverteilkanals 40 zu der Breite (Durchmesser) der Förderleitung im Verhältnis von 1/10 bis max. 10/10 beträgt.

Selbstverständlich ist die Erfindung auch darauf gerichtet, dass mehrere Luftverteilkanäle verteilt am Umfang der Förderleitung angeordnet sind, die ggf. auch durch getrennte Luftströme von getrennten Überströmventilen versorgt werden.

Die Luftübertrittsfläche 49 kann also in dem besagten Verhältnis 1/10 zu 10/10 im Bezug zum Durchmesser der Förderleitung gewählt werden, wobei aus ökonomischen Gründen etwa ein Verhältnis von 1/3 der Luftübertrittsfläche 49 im Bezug zum Durchmesser der Förderleitung 5 gewählt wird.

Die Luftverteilkanäle 40 können über beliebige Befestigungen 52 mit der Förderleitung 5 verbunden werden. Derartige Befestigungen sind Klebungen, Nieten, Schrauben oder dgl. mehr.

Der Luftverteilkanal 40 besteht bevorzugt aus einem Metallprofil, er kann aber auch aus einem Kunststoffprofil bestehen.

### Zeichnungslegende

- 1: Aufgabetrichter
- 2: Schüttgut
- 3: Zellenradschleuse
- 4: Motor
- 5: Förderleitung
- 6: Druckminderer
- 7: Lavaldüse
- 8: Rückschlagventil
- 9: Reinluftleitung
- 10: Begleitleitung
- 11: Abzweigung
- 12: "
- 13: "
- 14: "
- 15 . .: "
- 20: Überströmventil
- 21: " "
- 22: " "
- 23: " "
- 24: " "
- 25 .: " "
- 31: Verschluss
- 40: Luftverteilkanal
- 41: Länge
- 42: Abstand
- 43: Schutzrohr
- 44: Dichtmaterial
- 45 46: Seitenwand
- 47: Ausströmöffnung
- 48: Pfeilrichtung
- 49: Luftübertrittsfläche
- 50: Luftraum
- 51: Stirnwand 51 a
- 52: Befestigung
- 53: Schlitz
- . 64: Bohrung
- 65: Ventilgehäuse
- 66: Kammer
- 67: Stutzen
- 68: Ventilscheibe
- 69: Ventilstößel
- 70: Lagerbüchse
- 71: Ventilschaft
- 72: Feder
- 73: Einstellhülse
- 74: Kontermutter
- 75: Rohr
- 76: Entlüftungsbohrung
- 77: Kammer
- 78: Kegelventil
- 79: Ventilkegel
- 80: Ventilplatte
- 81: Feder
- 82: Mutter
- 83: Bohrung
- 84: Bohrung
- 85: Ventilsitz

## Patentansprüche

1. Vorrichtung zur pneumatischen, pfropfenbildenden Dichtstromförderung von Schüttgütern mittels einer Förderleitung und einer reingasführenden Nebenleitung, von wo aus mehrfach Verbindungen mittels federgesperrter Überströmventile zur Förderleitung hergestellt sind, und die Überströmventile dergestalt geregelt sind, dass Reingas in die Förderleitung eingeblasen wird, wenn sich unter dem Ventil in der Förderleitung ein Pfropfen bildet, **dadurch gekennzeichnet, dass** das Überströmventil (20 - 25) in einen Luftverteilkanal (40) mündet, welcher axial sich parallel zur Oberfläche der Förderleitung (5) erstreckt und luftdurchgängig die Wandung der Förderleitung (5) in diesem Bereich durchbricht.

2. Vorrichtung nach Anspruch 1, **dadurch gekennzeichnet, dass** das Überströmventil (20-25) einen in axialer Richtung der Förderleitung gerichteten Luftschleier zur Fluidisierung des Fördergutes einbläst, sofern in dem vom Luftverteilkanal (40) gebildeten Luftraum (50) eine Druckabsenkung von der Förderleitung in diesen Luftraum wirkt und die federbelastete Ventilfläche (79) des Überströmventils in Offenstellung bewegt.

3. Vorrichtung nach einem der Ansprüche 1 oder 2, **dadurch gekennzeichnet, dass** der Ventilauslaß (Ausströmöffnung 47) des Überströmventils (20-25) luftschlüssig in den Luftverteilkanal (40) hinein ragt und dass der Luftverteilkanal (40) etwa langlochförmig in axialer Richtung der Förderleitung ausgerichtet ist und die Wandung der Förderleitung (5) luftschlüssig durchbricht.

4. Vorrichtung nach Anspruch 3, **dadurch gekennzeichnet, dass** die Durchbrechung in der Wandung des Förderrohres als länglicher Schlitz (53) ausgebildet ist.

5. Vorrichtung nach Anspruch 4, **dadurch gekennzeichnet, dass** der Schlitz (53) mit einem Material ausgekleidet ist, welches einerseits die Reinluft durchläßt und andererseits ein Übertritt des Fördergutes in die Reinluftleitung verhindert.

6. Vorrichtung nach Anspruch 5, **dadurch gekennzeichnet, dass** das Material im Schlitz (53) ein Sintermaterial ist.

7. Vorrichtung nach einem der Ansprüche 1-6, **dadurch gekennzeichnet, dass** mehrere Luftverteilkanäle (40) in axialer Richtung hintereinander liegend in gegenseitigen Abstand am Förderrohr (5) angeordnet sind.

8. Vorrichtung nach Anspruch 7, **dadurch gekennzeichnet, dass** der gegenseitige Abstand zwischen den hintereinander liegenden Luftverteilkanälen (40) um ein Vielfaches kleiner ist, als deren jeweilige axiale Länge.

9. Vorrichtung nach einem der Ansprüche 1-8, **dadurch gekennzeichnet, dass** der Durchmesser des Förderrohres (5) in Bezug zur Breite des Luftverteilkanals (4) sich im Verhältnis von 1/10 bis 10/10 verhält.

## Claims

1. Apparatus for pneumatic, plug-forming dense-stream conveying of bulk materials by means of a delivery pipe and a clean gas-conducting auxiliary pipe, from where connections are made multiply to the delivery pipe by means of spring-locked overflow valves, and the overflow valves are regulated in such a way that clean gas is injected into the delivery pipe when a plug forms under the valve in the delivery pipe, **characterised in that** the overflow valve (20-25) leads into an air distribution duct (40) which extends axially parallel to the surface of the delivery pipe (5) and breaks through the wall of the delivery pipe (5) in this region, letting air through.

2. Apparatus according to claim 1, **characterised in that** the overflow valve (20-25) injects an air curtain directed in the axial direction of the delivery pipe to fluidise the material to be conveyed as far as, in the air chamber (50) formed by the air distribution duct (40), a pressure drop operates from the delivery pipe into this air chamber and moves the spring-loaded valve surface (79) of the overflow valve into the open position.

3. Apparatus according to one of claims 1 or 2, **characterised in that** the valve outlet (outlet opening 47) of the overflow valve (20-25) extends into the air distribution duct (40), trapping air, and **in that** the air distribution duct (40) is oriented approximately in the form of an elongate hole in the axial direction of the delivery pipe and breaks through the wall of the delivery pipe (5), trapping air.

4. Apparatus according to claim 3, **characterised in that** the break-through in the wall of the delivery pipe is designed as an elongate slot (53).

5. Apparatus according to claim 4, **characterised in that** the slot (53) is lined with a material which on the one hand lets through the clean air and on the other hand prevents the material to be conveyed from passing over into the clean air pipe.

6. Apparatus according to claim 5, **characterised in that** the material in the slot (53) is a sintered material.

7. Apparatus according to one of claims 1-6, **characterised in that** several air distribution ducts (40) are arranged with mutual spacing on the delivery pipe (5), lying one behind the other in the axial direction

8. Apparatus according to claim 7, **characterised in that** the mutual spacing between the air distribution ducts (40) lying one behind the other is smaller by a multiple than the respective axial length thereof.

9. Apparatus according to one of claims 1-8, **characterised in that** the diameter of the delivery pipe (5) in relation to the width of the air distribution duct (4) is in a ratio of 1/10 to 10/10.

## Revendications

1. Dispositif pour le transport pneumatique, en courant dense formant des bouchons, de produits en vrac à l'aide d'une conduite de transport et d'une conduite secondaire amenant du gaz pur, à partir de laquelle plusieurs liaisons sont réalisées avec ladite conduite de transport à l'aide de soupapes de décharge fermées par ressort, lesdites soupapes étant réglées pour que du gaz pur soit injecté dans la conduite de transport lorsqu'un bouchon se forme dans celle-ci sous la soupape, **caractérisé en ce que** la soupape de décharge (20-25) débouche dans un conduit de distribution d'air (40) qui s'étend axialement parallèlement à la surface de la conduite de transport (5) et qui traverse, en laissant passer l'air, la paroi de la conduite de transport (5) dans cette zone.

2. Dispositif selon la revendication 1, **caractérisé en ce que** la soupape de décharge (20-25), en vue de fluidiser les produits transportés, injecte un rideau d'air orienté dans le sens axial de la conduite de transport, dans la mesure où dans la chambre à air (50) définie par le conduit de distribution d'air (40), une baisse de pression agit à partir de la conduite de transport et amène la surface contrainte par ressort (79) de la soupape de décharge dans la position ouverte.

3. Dispositif selon la revendication 1 ou 2, **caractérisé en ce que** la sortie (ouverture d'écoulement 47) de la soupape de décharge (20-25) pénètre de manière étanche à l'air dans le conduit de distribution d'air (40), et **en ce que** le conduit de distribution d'air (40) est orienté, à peu près en forme de trou oblong, dans le sens axial de la conduite de transport (5) et perce de manière étanche à l'air la paroi de celle-ci.

4. Dispositif selon la revendication 3, **caractérisé en ce que** la percée prévue dans la paroi du tube de transport est conçue comme une fente oblongue (53).

5. Dispositif selon la revendication 4, **caractérisé en ce que** la fente (53) est revêtue d'un matériau qui laisse passer l'air pur, d'une part, et qui empêche le passage des produits à transporter dans la conduite d'air pur, d'autre part.

6. Dispositif selon la revendication 5, **caractérisé en ce que** le matériau prévu dans la fente (53) est un matériau fritté.

7. Dispositif selon l'une des revendications 1 à 6, **caractérisé en ce que** plusieurs conduits de distribution d'air (40) sont disposés sur le tube de transport (5), les uns derrière les autres dans le sens axial et espacés les uns des autres.

8. Dispositif selon la revendication 7, **caractérisé en ce que** la distance mutuelle entre les conduits de distribution d'air (40) disposés les uns derrière les autres est plusieurs fois inférieure à leur longueur axiale respective.

9. Dispositif selon l'une des revendications 1 à 8, **caractérisé en ce que** le diamètre du tube de transport (5) est de 1/10 à 10/10 par rapport à la largeur du conduit de distribution d'air (40).
